# EUROPÄISCHE PATENTSCHRIFT

(11) **EP 0 569 828 B1**
(45) Veröffentlichungstag und Bekanntmachung des Hinweises auf die Patenterteilung: **21.08.1996**
(21) Anmeldenummer: 93107245.8
(22) Anmeldetag: 05.05.1993
(51) Int. Cl.: C02F 3/28

(54) **Anaerobe Aufbereitungsanlage für Abwässer, Fäkalien und Gülle**
Anearobic plant for treating waste water, sewage and manure
Installation pour le traitement anaérobie des eaux usées, égouts et lisiers

(30) Priorität: 14.05.1992 DE 4215952
(43) Veröffentlichungstag der Anmeldung: 18.11.1993
(73) Patentinhaber: Herold & Co. GmbH, D-95482 Gefrees (DE)
(72) Erfinder: Langer, Gerd, W-8580 Bayreuth (DE)
(74) Vertreter: Rau, Manfred, Dr. Dipl.-Ing.

(56) Entgegenhaltungen:
- EP-A- 0 304 734
- EP-A- 0 378 735
- EP-A- 0 474 325
- DE-A- 2 103 166
- DE-A- 3 715 952
- DE-A- 3 800 613

## Beschreibung

Die Erfindung richtet sich auf eine anaerobe Aufbereitungsanlage für Abwässer, Fäkalien und Gülle mit wenigstens einem Behälter zur Aufnahme und zur biologischen Behandlung des zu klärenden Abwassers, wobei die Behältergröße den Anforderungen entsprechend veränderbar ist.

Eine gattungsgemäße Anlage in Form einer Kläranlage ist aus der DE 39 29 510 C2 bekannt.

In dieser Druckschrift wird als Motivation für den modularen Aufbau insbesondere beschrieben, daß der Nachteil großer Kläranlagen darin besteht, daß sie erst ab einer bestimmten Abwassermenge wirtschaftlich arbeiten würden, wohingegen kleinere Kläranlagen den Nachteil aufweisen würden, daß sie nur sehr schwer oder gar nicht an unterschiedliche Abwassermengen bzw. -qualitäten angepaßt werden können. Abwassermenge, Konzentration und Art der Verunreinigungen können zum Teil aber stark variieren, z.B. durch unterschiedliche Lebensgewohnheiten im Verlauf eines Tages oder durch saisonal bedingte Abwässer wie etwa bei Hotels, landwirtschaftlichen Betrieben, Feriensiedlungen oder dergleichen.

In diesem Zusammenhang wird dort auch das Problem diskutiert, daß der biologische Kreislauf einer Kläranlage einen mehr oder weniger konstanten Anteil an aktiver Biomasse benötigt, so daß die gesamte Anlage erforderlichenfalls abgeschaltet und später wieder angefahren werden müsse.

Um insoweit Abhilfe zu schaffen, ist es aus dieser Druckschrift bekannt, einen Behälter vorzusehen, der auch zur biologischen Behandlung des Abwassers dient, und der in mehrere Kammern unterteilt ist, wobei die einzelnen Kammern in Abhängigkeit von der Menge und Art des zu behandelnden Abwassers miteinander verbindbar sind. Die durch die Trennwände definierten einzelnen Kammern sind in einer Ebene horizontal nebeneinander angeordnet.

Hiervon ausgehend liegt der Erfindung die Aufgabe zugrunde, eine Anlage der eingangs genannten Art so auszugestalten, daß einerseits die Anlage dank ihres modularen Aufbaus an spezifische Anwendungsverhältnisse leicht anpaßbar ist, daß aber andererseits wiederum die Erstellungskosten nicht proportional zur Größe der Anlage wachsen.

Weiterhin soll es möglich sein, eine derartige Anlage nachträglich beliebig erweitern zu können, ohne daß hierdurch die grundsätzliche Betriebsweise verändert werden müßte.

Diese Aufgabe wird erfindungsgemäß dadurch gelöst, daß der Behälter aus einer Mehrzahl von quader- bzw. würfelförmigen Teil-Behältern gebildet ist, wobei diese Teilbehälter unter Ausbildung von Säulen vertikal und miteinander in Strömungsverbindung stehend angeordnet sind, wobei erforderlichenfalls eine Mehrzahl derartiger Säulen den Gesamt-Behälter ausbildet, und wobei Einrichtungen zur Einstellung des Füllstandes jeder Behältersäule derart vorgesehen sind, daß jede Behältersäule stets bis in den Bereich des obersten Teil-Behälters gefüllt ist.

Durch diese Ausgestaltung wird ein raumsparender, nur eine geringe Fläche beanspruchender Aufbau möglich. Als besonderer Vorteil ergibt sich dabei, daß jeweils nur der oberste Teil-Behälter korrosionsgefährdet ist und dementsprechend aus Edelstahl ausgeführt werden muß, weil die darunter liegenden Teil-Behälter aufgrund der Einstellung des Flüssigkeitsspiegels nicht mit Luft in Berührung kommen.

Vorteilhafterweise ist vorgesehen, daß in jedem Teil-Behälter Immobilisierungskörper für Bakterienkulturen angeordnet sind.

Diese Immobilisierungskörper können günstigerweise als parallel zueinander angeordnete, vertikale, offenporige Platten ausgebildet sein. Hierdurch wird eine sehr große Oberfläche erreicht und andererseits eine Durchlässigkeit in vertikaler Richtung gewährleistet.

Zur Einstellung des entsprechenden Flüssigkeitspegels im Bereich des jeweils obersten Teil-Behälters ist erfindungsgemäß vorgesehen, daß an der Oberseite des jeweils obersten Teil-Behälters jeder Säule eine druckluftgesteuerte Dosieranordnung für nachzuführendes Abwasser angeordnet ist. Hier ist der Begriff Abwasser im weitesten Sinne zu verstehen und umfaßt je nach Anwendungsbereich auch Fäkalien und Gülle sowie Abwässer von Brauereien und ähnlichen Einrichtungen.

Durch diese druckluftgesteuerte Dosiereinrichtung ist es möglich, taktweise nacheinander die einzelnen Säulen einer Gesamtanordnung zu beschicken, so daß die Nachführung jeweils entsprechend dem Abbau und der Entnahme erfolgen kann und damit eine optimale Steuerung der anaeroben Vergärung möglich ist. Insbesondere ist es möglich, die Verteilung bzw. Zuteilung in Abhängigkeit von in unterschiedlicher Quantität anfallenden Abwassermengen zu bewerkstelligen, so daß das Problem entfällt, daß eine Stillegung oder Teilstillegung der Anlage erforderlich wäre, wenn sich der Abwasseranfall wesentlich verringert.

Weiterhin ist es aufgrund der erfindungsgemäßen Beschickung auch möglich, eine Anlage nachträglich praktisch beliebig zu vergrößern, was zum Beispiel erforderlich sein kann, wenn in einem landwirtschaftlichen Betrieb Gülle aufbereitet wird und der Viehbestand wesentlich erweitert wird, oder wenn bei der Aufbereitung von Haushaltsabwässern in einer kommunalen Kläranlage neue Siedlungsgebiete erschlossen werden. Hier erhält der kommunale Betreiber vor allem die Möglichkeit, die Anlage nach den aktuellen finanziellen Möglichkeiten der Gemeinde zu konzipieren, ohne im Vorgriff auf zukünftige Entwicklungen eine Überdimensionierung vornehmen zu müssen oder andererseits aber befürchten zu müssen, daß dann eine bestehende Anlage überhaupt nicht mehr eingesetzt werden kann.

Gemäß einer weiteren Ausgestaltung der Erfindung ist an der Oberseite des jeweils obersten Teil-Behälters jeder Säule eine Wasservorlage-Einrichtung für einen Wasserbehälter angeordnet, in dessen Bodenbereich eine Gasauslaßleitung mündet.

Durch die Einstellung des Wasserspiegels bzw. -pegels in diesem Wasserbehälter über die Vorlageeinrichtung ist es möglich, entsprechend der Höhe der Flüssigkeitssäule einen Gasdruck aufzubauen und vorzugeben, da der der Flüssigkeitssäule entsprechende Druck von dem austretenden Gas überwunden werden muß. Beispielsweise kann auf diese Weise ein Gasdruck von 200 mb aufgebaut werden. Hierdurch wird auch einer Schaumbildung an der Flüssigkeitsoberfläche entgegengewirkt.

Weiterhin kann mit Vorteil vorgesehen sein, daß an jedem jeweils obersten Teil-Behälter ein Schwimmer angeordnet ist, der bei Erhöhung des Flüssigkeitspegels die Gasauslaßleitung schließt, so daß eine zu einer Erhöhung des Flüssigkeitsspiegels führende Verstopfung durch eine Erhöhung des Gasdrucks beseitigt wird.

Günstigerweise ist vorgesehen, daß die Gasauslaßleitungen der obersten Teil-Behälter bzw. der einzelnen Säulen durch etwa horizontal verlaufende Gasleitungen verbunden sind, welche im Bereich ihres Mittelabschnitts angehoben sind, so daß sich im Gas bildendes Kondenswasser jeweils zu den benachbarten Säulen hin abläuft.

An jedem untersten Teil-Behälter jeder Säule kann mit Vorteil eine Standbeinanordnung vorgesehen sein, wobei sich ein konischer Auslaufabschnitt in diese hinein erstreckt. Dieser konische Auslaufabschnitt erlaubt ein Abziehen von Sedimenten, wobei hydraulisch oder pneumatisch betätigbare Schieber eine Absperrung gegen den Behälter hin ermöglichen.

Jeder konische Auslaufabschnitt kann von einem Rohr etwa mittig durchsetzt werden, durch welches zur Temperierung des Auslaufbereiches Heizflüssigkeit geleitet wird. Hierdurch kann erreicht werden, daß längs der gesamten Höhe der Säule eine für die anaerobe Vergärung optimale Temperatur eingestellt wird, da ansonsten die Gefahr besteht, daß zwar an der Oberseite jeder Säule das zu behandelnde Abwasser bzw. die Gülle mit einer optimal eingestellten Temperatur von z.B. 37°C zugeführt wird, daß zum unteren Ende der Säule aber eine zu starke Abkühlung stattfindet.

An jedem der konischen Auslaufabschnitte kann sich ein Auslaufstutzen anschließen, der in eine Querleitung mündet, der ein Gehäuse für einen Sperrschieber bildet, die die Auslaufstutzen der einzelnen Säulen miteinander verbindet, wobei diese Querleitung einerseits zum Produktabzug verwendet werden kann und andererseits über einen Wasseranschluß gespült werden kann.

Zur Erzielung einer Hygienisierung, insbesondere zur Vernichtung von Parasiten, wie Rinderbandwürmern, kann ein dem Behälter nachgeschalteter Boiler zum Erwärmen der geklärten Abwässer bzw. Gülle auf eine Temperatur von ca. 80°C über eine Zeit von ca. 1 Stunde vorgesehen sein.

Nachfolgend wird die Erfindung anhand eines bevorzugten Ausführungsbeispiels in Verbindung mit der Zeichnung näher erläutert. Dabei zeigen:
- Fig. 1: eine Seitenansicht einer erfindungsgemäßen Aufbereitungsanlage,
- Fig. 2: eine gegenüber der Ansicht gemäß Fig. 1 um 90° gedrehte Seitenansicht,

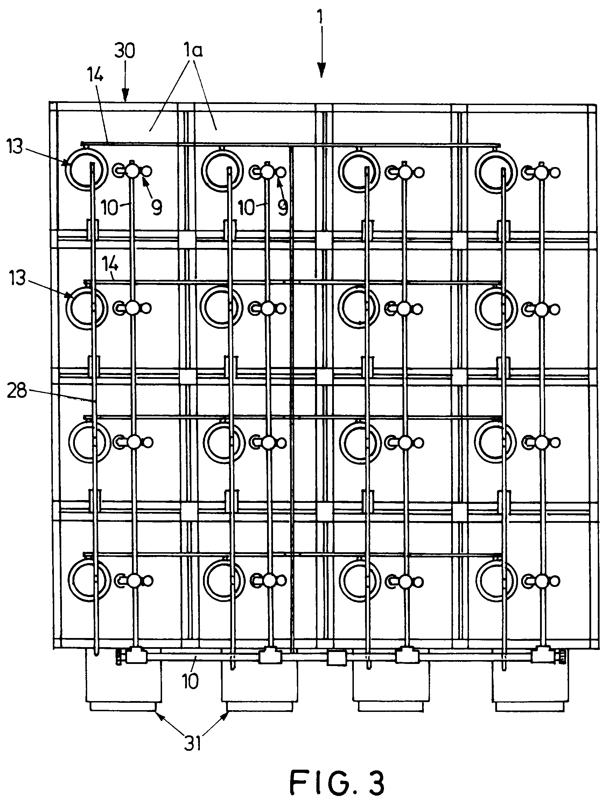

- Fig. 3: eine Aufsicht auf die in Fig. 1 und 2 dargestellte Anlage und
- Fig. 4: eine Schnittdarstellung der Wasservorlage-Einrichtung.

Eine in der Zeichnung dargestellte Aufbereitungsanlage, wie sie z.B. zur Aufbereitung kommunaler Abwässer eingesetzt werden kann, besteht aus einer Mehrzahl von Teil-Behältern 1, welche übereinander gestapelt jeweils eine Säule 2 ausbilden. Im Ausführungsbeispiel sind jeweils vier etwa quaderförmige Teil-Behälter 1 übereinander angeordnet. Die Behälter 1b,1c und 1d sind aus Stahlblech hergestellt, wobei lediglich der oberste Teil-Behälter 1a jeder Säule 2 aus Edelstahl gefertigt ist.

Jede Säule 2 bzw. jeder unterste Teil-Behälter 1d ruht auf einer Standbein-Anordnung 3. Zwischen jeder derartigen Standbein-Anordnung 3 ist an der Unterseite jedes untersten Teil-Behälters 1d ein konischer Auslaufabschnitt 4 ausgebildet, der in einen Auslaufstutzen 5 mündet, wobei die einzelnen Auslaufstutzen 5 miteinander durch eine Querleitung 6 verbunden sind, die über einen Anschlußstutzen 7 an einen Wasseranschluß anschließbar ist, um eine Spülung der Querleitung zu ermöglichen.

Weiterhin wird der konische Auslaufabschnitt 4 von einem Rohr 8 etwa mittig durchsetzt, durch welches aufgewärmtes Wasser geführt wird, um von unten her das in der jeweiligen Säule 2 befindliche Abwasser bzw. die dort vorhandene Gülle, die erwärmt von oben zugeführt wird, von unten her aufzuheizen und dementsprechend die Temperatur zu vergleichmäßigen.

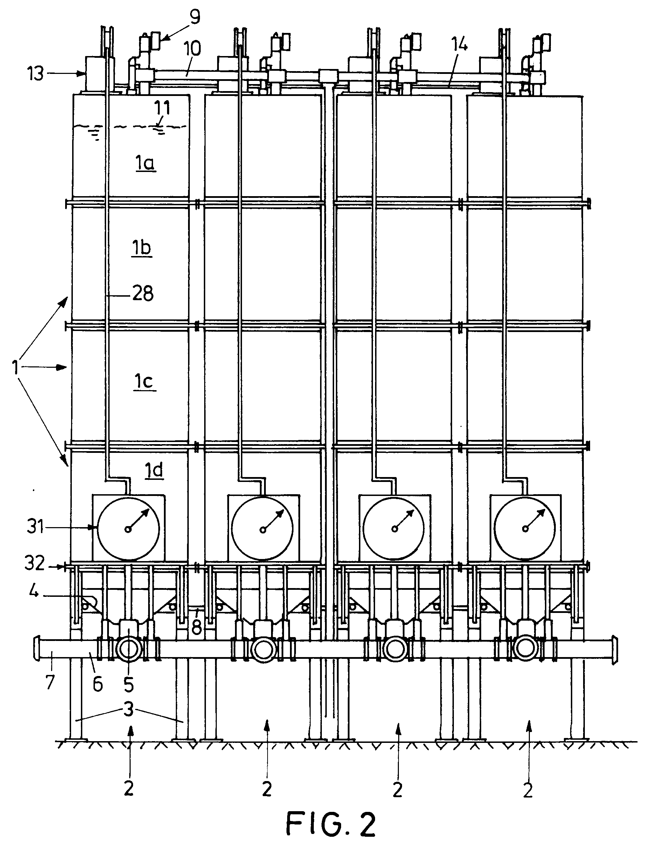

An der Oberseite des obersten Teil-Behälters 1a ist eine druckluftgesteuerte Dosieranordnung 9 vorgesehen, um über eine Leitung 10 Frischgülle oder frisches Abwasser derart zu dosieren, daß die einzelnen Säulen 2 jeweils nacheinander taktweise beschickt werden, so daß unabhängig von dem konkreten Anfall des zu behandelnden Abwassers oder der zu behandelnden Gülle sichergestellt ist, daß jeweils alle Säulen 2 einen gleichmäßig hohen Füllstand derart aufweisen, daß sich, wie in Fig. 2 schematisch angedeutet, der Flüssigkeitsspiegel 11 im Bereich des jeweils obersten Teil-Behälters 1a befindet und dementsprechend nur dort ein korrosionsfester Edelstahlbehälter vorgesehen sein muß.

Durch diese druckluftbetriebene Dosieranordnung 9 wird also die zu behandelnde Flüssigkeit auf die vorgesehene Säulen 2 bzw. Teil-Behälter 1, die insgesamt das Gesamtvolumen des Behälters 1 definieren, verteilt.

Weiterhin ist an der Oberseite jedes obersten Teil-Behälters 1a eine Wasservorlage-Anordnung 13 vorgesehen, wobei die einzelnen Wasservorlage-Anordnungen 13 über eine gemeinsame Wasserleitung 14 versorgt werden.

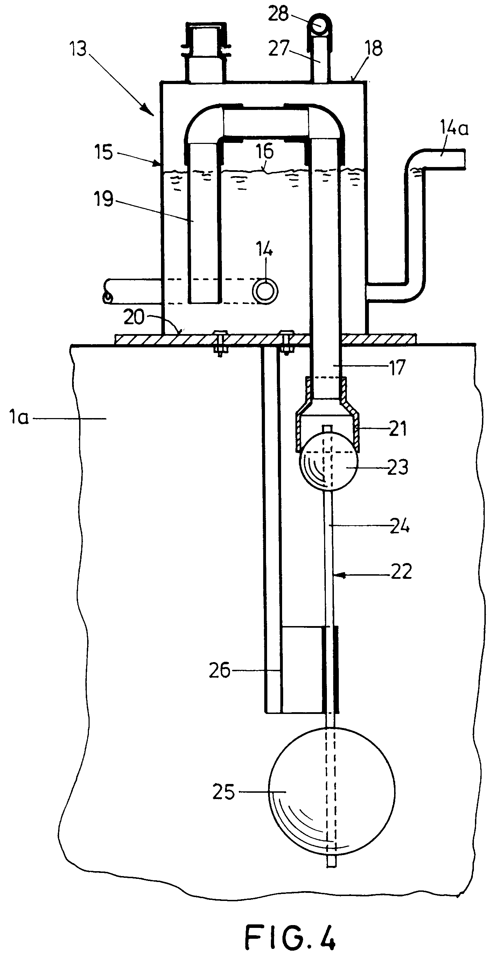

Jede Wasservorlage-Anordnung 13 umfaßt, wie in Fig. 4 im einzelnen dargestellt, einen Behälter 15, welcher auf der Oberseite des jeweils obersten Teil-Behälters 1a angeordnet ist. Im Bereich der Unterseite des Behälters 15 mündet die Wasserzuführungsleitung 14. Über diese Wasserzuführungsleitung 14 wird und die Wasserüberlaufleitung 14a, welche sich als Wasserzuführungsleitung 14 für die jeweils nächste Säule fortsetzt, wird ein definierter Wasserspiegel eingestellt.

Aus dem Bereich der Oberseite jedes obersten Teil-Behälters 1a mündet eine Leitung 17 in den Behälter 15, welche sich bis nahe an den Deckel 18 des Behälters 15 erstreckt und dort U-förmig nach unten abknickt, so daß ein freier U-Stutzen 19 im Bereich des Bodens 20 des Behälters 15 mündet.

Dementsprechend muß Biogas, welches an der Oberseite jeder Säule 2 bzw. im jeweils obersten Teil-Behälter 1a jeder Säule 2 entsteht, die Leitung 17 durchsetzen und einen Druck überwinden, der der Höhe des Flüssigkeitsspiegels 16 entspricht, z.B. einem Druck von 200 mb.

Die Rohrleitung 17 weist einen verbreiterten unteren Abschnitt 21 auf, unterhalb dessen eine Schwimmeranordnung 22 ausgebildet ist. Die Schwimmeranordnung umfaßt eine Ventilkugel 23, die in den Abschnitt 21 eingreift, ein Schwimmergestänge 24, einen kugelförmigen Schwimmer 25 und eine Schwimmerführung 26.

Sobald in einer Säule 2 aufgrund einer Verstopfung der Flüssigkeitsspiegel ansteigt und dementsprechend der Schwimmer 25 in den Abschnitt 21 des Rohres 17 gedrückt wird, kann über das Rohr 17 kein Biogas mehr entweichen und auch über die Leitung 28 nicht mehr abgezogen werden, so daß sich in der entsprechenden Säule 2 ein erhöhter Gasdruck aufbaut, der nach hinten durchschlägt und dazu führt, daß die Verstopfung selbsttätig beseitigt wird. Im übrigen dient die vorstehend beschriebene Anordnung dazu, den Biogas-Betriebsdruck entsprechend einzustellen.

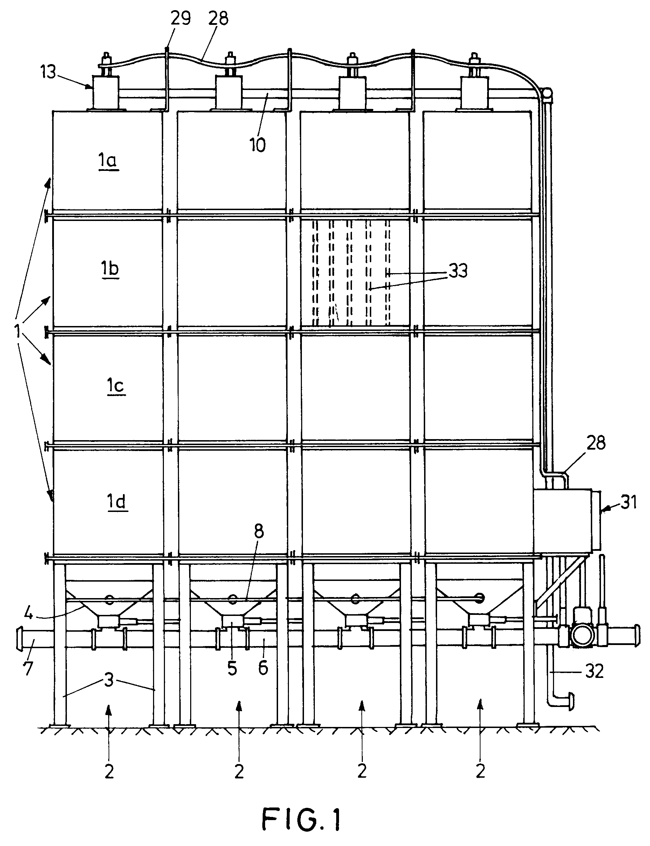

An der Oberseite jedes Behälters 15 der Wasservorlage-Anordung 13 erstreckt sich eine Gasauslaßleitung 27 nach oben weg, welche in eine Gasleitung 28 mündet, die die einzelnen Säulen miteinander verbindet. Wie aus Fig. 1 erkennbar ist, sind die einzelnen Abschnitte der Gasleitung 28 in der Mitte 29 zwischen zwei Säulen 1 angehoben, so daß sich in der Gasleitung 28 bildendes Kondenswasser zu den jeweils benachbarten Säulen 2 hin abläuft.

Die Gasleitungen 28 einer Reihe 30 von Säulen 2 werden an der Außenseite, wie in Fig. 2 erkennbar, nach unten geführt und münden jeweils in eine Gasuhr 31. Die Auslaßseiten der Gasuhr 31 werden wiederum durch eine gemeinsame Leitung 32 zusammengefaßt und das Gas wird abgezogen.

Im einzelnen nicht dargestellt sind in der Zeichnung plattenförmige, parallel zueinander vertikal angeordnete Immobilisierungskörper 33 aus offenporigem Material für die Bakterienkulturen, die in jedem Teil-Behälter 1 angeordnet sind. Aufgrund der vorstehend beschriebenen Einstellung des Pegels des zu behandelnden Abwassers werden diese Bakterienkulturen praktisch ständig in größerem oder kleinerem Umfang je nach Abwasseranfall mit Abwasser versorgt. Die Einstellung des Pegels in jeder Säule 2 kann entweder mittels eines Meßfühlers erfolgen, der die preßluftgesteuerte Dosieranordnung 9 je nach Veränderung des Pegels ansteuert, oder aber nach einem zeitlich vorgegebenen Verteilungsplan, der korreliert ist, mit dem Abzug behandelnden Abwassers an der Unterseite.

Die einfachste Möglichkeit der Einstellung eines bestimmten Flüssigkeitsniveaus besteht allerdings in dem Vorsehen einer Überlaufleitung.

## Patentansprüche

1. Aufbereitungsanlage für anaerobe Abwässer, Fäkalien und Gülle mit wenigstens einem Behälter zur Aufnahme und zur biologischen Behandlung des zu klärenden Abwassers, wobei die Behältergröße den Anforderungen entsprechend veränderbar ist, **dadurch gekennzeichnet, daß** der Behälter (15) aus einer Mehrzahl von quader- bzw. würfelförmigen Teil-Behältern (1) gebildet ist, wobei diese Teil-Behälter (1) unter Ausbildung von Säulen (2) vertikal und miteinander in Strömungsverbindung stehend angeordnet sind, wobei erforderlichenfalls eine Mehrzahl derartiger Säulen (2) den Gesamt-Behälter (15) ausbildet, und wobei Einrichtungen zur Einstellung des Füllstandes jeder Behältersäule (2) derart vorgesehen sind, daß jede Behältersäule (2) stets bis in den Bereich des obersten Teil-Behälters (1a) gefüllt ist.

2. Aufbereitungsanlage nach Anspruch 1, **dadurch gekennzeichnet, daß** in jedem Teil-Behälter (1) Immobilisierungskörper (33) für Bakterienkulturen angeordnet sind.

3. Aufbereitungsanlage nach Anspruch 2, **dadurch gekennzeichnet, daß** die Immobilisierungskörper (33) als parallel zueinander angeordnete, vertikale, offenporige Platten ausgebildet sind.

4. Aufbereitungsanlage nach Anspruch 1, **dadurch gekennzeichnet, daß** an der Oberseite des jeweils obersten Teil-Behälters (1a) jeder Säule (2) eine druckluftgesteuerte Dosieranordnung (9) für nachzuführendes Abwasser angeordnet ist.

5. Aufbereitungsanlage nach Anspruch 1, **dadurch gekennzeichnet, daß** an der Oberseite des jeweils obersten Teil-Behälters (1a) jeder Säule (2) eine Wasservorlage-Einrichtung (13) mit einem Wasserbehälter (15) angeordnet ist, in dessen Bodenbereich (20) eine Gasauslaßleitung (17) mündet.

6. Aufbereitungsanlage nach Anspruch 5, **dadurch gekennzeichnet, daß** an jedem jeweils obersten Teil-Behälter (1a) ein Schwimmer (22) angeordnet ist, der bei Erhöhung des Flüssigkeitsspiegels (16) die Gasauslaßleitung (17) schließt, so daß eine zu einer Erhöhung des Flüssigkeitsspiegels (16) führende Verstopfung durch eine Erhöhung des Gasdrucks beseitigt wird.

7. Aufbereitungsanlage nach Anspruch 6, **dadurch gekennzeichnet, daß** Gasauslaßleitungen (27) der obersten Teil-Behälter (1a) bzw. der einzelnen Säulen (2) durch etwa horizontal verlaufende Gasleitungen (28) verbunden sind, welche im Bereich ihres Mittelabschnitts (29) angehoben sind, so daß sich im Gas bildendes Kondenswasser jeweils zu den benachbarten Säulen (2) hin abläuft.

8. Aufbereitungsanlage nach Anspruch 1, **dadurch gekennzeichet, daß** an dem untersten Teil-Behälter (1d) jeder Säule (2) eine Standbeinanordnung (3) vorgesehen ist, wobei sich ein konischer Auslaufabschnitt (4) in diese hinein erstreckt.

9. Aufbereitungsanlage nach Anspruch 8, **dadurch gekennzeichnet, daß** jeder konische Auslaufabschnitt (4) von einem Rohr (8) etwa mittig durchsetzt wird, durch welches zur Temperierung des Auslaufbereiches Heizflüssigkeit geleitet wird.

10. Aufbereitungsanlage nach Anspruch 8, **dadurch gekennzeichnet, daß** sich an jeden Auslaufabschnitt (4) ein Auslaufstutzen (5) anschließt, der in eine Querleitung (6) mündet, die die Auslaufstutzen (5) der einzelnen Säulen (2) miteinander verbindet, wobei diese Querleitung (6) über einen Wasseranschluß (7) durch Wasser spülbar ist.

11. Aufbereitungsanlage nach Anspruch 1, **gekennzeichnet durch** einen dem Behälter (15) nachgeschalteten Boiler zum Erwärmen der geklärten Abwässer bzw. Gülle auf eine Temperatur von ca. 80°C über eine Zeit von ca. 1 Stunde.

## Claims

1. Plant for treating anaerobic waste water, sewage and manure, comprising at least one tank for receiving and biologically treating the waste water to be purified, the size of the tank being modifiable to meet requirements, characterized in that the tank consists of a plurality of cuboidal or cubic compartments (1), these compartments (1) being in flow connection and disposed vertically to form columns (2), a plurality of these columns (2), if required, constituting the entire tank, and means for regulating the level of each column (1) being provided in such a way that each column (2) is always filled as far as to the uppermost compartment (1a).

2. Plant according to claim 1, characterized in that immobilization bodies for bacterial cultures are disposed in each compartment (1).

3. Plant according to claim 2, characterized in that the immobilization bodies (33) are vertical, open-cell plates disposed parallel to each other.

4. Plant according to claim 1, characterized in that, a compressed-air-controlled proportioning arrangement (9) for waste water that is to be refilled is disposed on the upper side of the in each case uppermost compartment (1a) of each column (2).

5. Plant according to claim 1, characterized in that on the upper side of the in each case uppermost compartment (1a) of each column (2), provision is made for a water receiver (13) having a water tank (15), into the bottom (20) of which opens a gas outlet conduit (17).

6. Plant according to claim 5, characterized in that a float (22) is disposed on each uppermost compartment (1a), the float (22) closing the gas outlet conduit (17) when the liquid level (16) rises so that any stopping-up that might result in the liquid level (16) rising is eliminated by an increase of the gas pressure.

7. Plant according to claim 6, characterized in that gas outlet conduits (27) of the uppermost compartments (1a) or of the individual columns (2), respectively, are interconnected by gas conduits (28) of approximately horizontal extension, which are elevated in the vicinity of their central portion (29) for condensation water forming in the gas to flow off towards the adjacent columns (2).

8. Plant according to claim 1, characterized in that a post arrangement (3) is provided on the lowermost compartment (1d) of each column (2), a conical throat portion (4) extending into this post arrangement (3).

9. Plant according to claim 8, characterized in that each conical throat portion (4) is penetrated centrally by a pipe (8), through which passes heating liquid for controlling the temperature of the throat portion.

10. Plant according to claim 8, characterized in that each throat portion (4) is followed by a throat socket (5), which opens into a transverse conduit (6) that interconnects the throat sockets (5) of the individual columns (2), it being possible, via a water inlet (7), to rinse this transverse conduit (6) with water.

11. Plant according to claim 1, characterized by a boiler disposed downstream of the tank (1) for heating the purified waste water or manure to a temperature of approximately 80°C over a time of approximately 1 hour.

## Revendications

1. Installation de traitement anaérobie des eaux usées, matières fécales et lisiers, comprenant au moins un réservoir pour recevoir et pour traiter biologiquement les eaux usées à épurer, la taille du réservoir pouvant être modifiée en fonction des exigences, caractérisée en ce que le réservoir (15) est formé d'une pluralité de réservoirs partiels de forme parallélépipédique ou cubique (1), ces réservoirs partiels (1) étant disposés verticalement en formant des colonnes (2) et étant reliés entre eux par une liaison d'écoulement, une pluralité de ces colonnes (2) formant si nécessaire le réservoir global (15), et des dispositifs pour régler le niveau de remplissage de chaque colonne de réservoir (2) étant prévus, de façon que chaque colonne de réservoir (2) soit toujours remplie jusque dans la zone du réservoir partiel supérieur (1a).

2. Installation de traitement selon la revendication 1, caractérisée en ce que des éléments (33) pour immobiliser les cultures bactériennes sont disposés dans chaque réservoir partiel (1).

3. Installation de traitement selon la revendication 2, caractérisée en ce que les éléments d'immobilisation (33) sont réalisés sous la forme de plaques verticales à pores ouverts disposées parallèlement les unes aux autres.

4. Installation de traitement selon la revendication 1, caractérisée en ce qu'un dispositif à air comprimé (9) destiné à doser l'appoint en eaux usées est implanté sur le dessus du réservoir partiel supérieur (1a) de chaque colonne (2).

5. Installation de traitement selon la revendication 1, caractérisée en ce qu'il est prévu, sur le dessus du réservoir partiel supérieur (1a) de chaque colonne (2), un dispositif à soupape d'eau (13) muni d'un réservoir d'eau (15), dans la zone de fond (20) duquel débouche une conduite de sortie de gaz (17).

6. Installation de traitement selon la revendication 5, caractérisée en ce que sur chaque réservoir partiel supérieur (1a) est disposé un flotteur (22) qui, en cas d'élévation du niveau (16) du liquide, ferme la conduite de sortie de gaz (17), ce qui, en augmentant la pression gazeuse, supprime un engorgement responsable d'une élévation du niveau du liquide (16).

7. Installation de traitement selon la revendication 6, caractérisée en ce que les conduites de sortie de gaz (27) des réservoirs partiels supérieurs (1a) ou des différentes colonnes (2) sont reliées par des conduites de gaz sensiblement horizontales (28) qui sont surélevées dans la zone de leur portion centrale (29), de façon que l'eau de condensation formée dans le gaz s'écoule vers les colonnes voisines (2).

8. Installation de traitement selon la revendication 1, caractérisée en ce que sur le réservoir partiel inférieur (1d) de chaque colonne (2) est prévue une structure porteuse (3), dans laquelle pénètre une portion conique de sortie (4).

9. Installation de traitement selon la revendication 8, caractérisée en ce que chaque portion conique de sortie (4) est traversée sensiblement en son centre par un tube (8) qui est parcouru par un liquide chauffant pour maintenir en température la zone de sortie.

10. Installation de traitement selon la revendication 8, caractérisée en ce qu'à chacune des portions coniques de sortie (4) est raccordée une tubulure de sortie (5) qui débouche dans une conduite transversale (6) reliant les tubulures de sortie (5) des différentes colonnes (2), cette conduite transversale (6) pouvant être rincée par l'intermédiaire d'un branchement d'eau (7).

11. Installation de traitement selon la revendication 1, caractérisée par une chaudière implantée en aval du réservoir (15) pour chauffer les eaux usées ou les lisiers épurés à une température d'environ 80 °C pendant une durée d'environ 1 heure.
